# FASCICULE DE BREVET EUROPEEN

(11) **EP 3 976 901 B1**
(45) Date de publication et mention de la délivrance du brevet: **24.05.2023**
(21) Numéro de dépôt: 20727300.4
(22) Date de dépôt: 25.05.2020
(51) Int. Cl.: E04F 11/18

(54) **AGENCEMENT POUR LA FIXATION D'UN PANNEAU DANS UN RAIL PAR SERRAGE DE COINS EXTÉRIEURS DEPUIS UN CÔTÉ INTÉRIEUR DU PANNEAU**
ANORDNUNG ZUM BEFESTIGEN EINER PLATTE IN EINER SCHIENE DURCH ANZIEHEN VON AUSSEN LIEGENDEN KEILEN VON EINER INNENSEITE DER PLATTE HER
ARRANGEMENT FOR SECURING A PANEL IN A RAIL BY TIGHTENING OUTER WEDGES FROM AN INNER SIDE OF THE PANEL

(30) Priorité: 31.05.2019 FR 1905808
(43) Date de publication de la demande: 06.04.2022
(73) Titulaire: SB Ingénierie, 74330 Poisy (FR)
(72) Inventeur: GIACOMETTI, Sylviane, 74330 Poisy (FR); CHAPEL, Romain, 74540 Saint-Silvestre (FR); ROUIF, Léandre, 74000 Annecy (FR)
(74) Mandataire: Cabinet Laurent & Charras
(86) Numéro de dépôt international: PCT/EP2020/064396
(87) Numéro de publication internationale: WO 2020/239670

(56) Documents cités:
- EP-A1- 3 323 958
- EP-A2- 2 921 607
- DE-B3-102016 112 775

## Description

### Domaine technique de l'invention

L'invention concerne le domaine des dispositifs de fixation de panneaux, notamment de panneaux en verre, dans un rail par serrage de coins situés de part et d'autre du panneau dans une rainure du rail.

### Arrière-plan technique

Il est connu de réaliser des garde-corps par fixation d'un panneau vertical dans la rainure d'un rail. Un tel panneau est par exemple réalisé en verre.

Classiquement, la mise en position et la fixation d'un panneau de garde-corps dans la rainure est réalisé par l'insertion d'au moins deux coins opposés de part et d'autre du panneau. Afin de pouvoir ajuster la verticalité du panneau en même temps que sa fixation, le serrage de chaque coin est ajusté au moyen d'un ensemble vis-écrou associé. Le coin est ainsi serré soit par déplacement de la vis, soit par déplacement de l'écrou lors du vissage de la vis.

Chaque ensemble vis-écrou est agencé du même côté du panneau que le coin dont il commande le serrage. Ainsi, lors du montage du garde-corps, un opérateur installe tout d'abord le panneau dans la rainure. L'opérateur accède ensuite à un premier côté du panneau pour ajuster le serrage du premier coin. Puis l'opérateur accède ensuite à l'autre côté du panneau pour ajuster le serrage du deuxième coin opposé.

Un exemple d'un tel agencement pour la fixation d'un panneau est par exemple divulgué dans le document EP 2 921 607 A2.

Un tel agencement permet une fixation très résistante du panneau dans la rainure tout en permettant d'ajuster facilement la verticalité du panneau.

Cependant, dans certain cas, le panneau n'est facilement accessible que d'un seul côté, dit côté intérieur. C'est notamment le cas lorsque le garde-corps est agencé en altitude, dans lequel le côté extérieur donne sur le vide. Il en résulte l'impossibilité de visser correctement le coin qui est située sur l'autre côté extérieur sans utiliser un moyen de levage tel qu'une nacelle ou un échafaudage.

Pour résoudre ce problème on a déjà proposé des agencements de fixation ne comportant des coins que du côté intérieur.

Cependant, un tel agencement ne permet pas d'ajuster facilement la verticalité du panneau pendant l'opération de fixation.

On a aussi proposé de tirer le coin situé du côté extérieur depuis le côté intérieur du panneau au moyen d'un ruban flexible.

Un agencement de ce type est connu de DE 10 2016 112775 B3.

Cependant, cette solution est complexe et onéreuse à mettre en oeuvre. Le ruban flexible doit en effet pouvoir supporter une tension très élevée. De ce fait, le ruban doit être réalisé en un matériau qui soit à la fois souple et très résistant à la traction. De plus, le ruban applique une pression très importante sur le berceau du panneau.

Le document EP 3 323 958 A1 divulgue un agencement pour la fixation d'un panneau vertical dans une rainure longitudinale selon le préambule de la revendication indépendante.

### Résumé de l'invention

L'invention propose un agencement pour la fixation d'un panneau vertical dans une rainure longitudinale ouverte verticalement vers le haut pour la réception d'un chant inférieure du panneau, le panneau comportant une face intérieure et une face extérieure, la fixation étant réalisée par serrage transversal entre des coins opposés transversalement, l'agencement comportant :
- au moins un premier coin extérieur supérieur et au moins un deuxième coin extérieur inférieur qui sont chacun intercalés entre une face extérieure verticale de la rainure et la face verticale extérieure du panneau, chacun des coins extérieurs étant monté coulissant verticalement dans la rainure entre une position desserrée et une position serrée entre la face extérieure de la rainure et la face extérieure du panneau ;
- au moins deux organes de transmission mobiles qui sont interposés entre le chant du panneau et un fond de la rainure et qui sont chacun apte à transmettre un effort de coulissement à un coin extérieur associé appliqué depuis un côté intérieur du panneau,
   les coins extérieurs supérieur et inférieur coulissant verticalement;
le deuxième coin extérieur inférieur coulissant verticalement vers le haut depuis sa position desserrée vers sa position serrée située au-dessus de la position desserrée.

L'agencement est caractérisé en ce que le premier coin extérieur supérieur coulisse verticalement vers le haut depuis sa position desserrée vers sa position serrée située au-dessus de la position desserrée.

Selon d'autres caractéristiques de l'invention :
- pour commander les coins extérieurs vers leur position serrée, tous les organes de transmission mobiles sont sollicités en compression par au moins un dispositif de commande qui est agencé du côté intérieur du panneau ;
- chaque organe de transmission mobile est formé par au moins un élément rigide en forme de segment semi-circulaire qui est reçu coulissant dans un canal de forme complémentaire agencé entre le chant du panneau et le fond de la rainure ;
- les organes de transmission sont montés en parallèles les uns par rapport aux autres ;
- le canal est réalisé dans un berceau qui enfourche le chant du panneau et qui est interposé entre le panneau et le fond de la rainure ;
- chaque coin extérieur est interposé entre une aile extérieure du berceau et la face extérieure du panneau ;
- au moins l'un des coins extérieur se déplace transversalement en direction du panneau lors de son coulissement vers sa position serrée, ledit coin extérieur comportant une face de serrage qui est tournée vers la face extérieure du panneau ;
- au moins l'un des coins extérieurs se déplace uniquement verticalement lors de son coulissement vers sa position serrée, au moins un patin de serrage monté coulissant transversalement étant interposé entre au moins l'un des coins extérieurs et la face extérieure du panneau, le patin de serrage comportant une face de serrage tournée vers la face extérieure du panneau ;
- une cale est interposée entre la face extérieure du panneau et la face de serrage.
- l'agencement comporte deux dispositifs de commande distincts pour commander indépendamment le coulissement du coin extérieur supérieur et du coin extérieur inférieur ;
- chaque dispositif de commande comporte au moins une vis qui est apte à solliciter chaque organe de transmission, la vis de commande étant vissée dans un écrou qui est monté fixe par rapport au berceau pour permettre le déplacement axial de la vis de commande par rapport au berceau par vissage ou dévissage, chaque dispositif de commande commandant le serrage de chacun des coins extérieurs supérieur et inférieur indépendamment l'un de l'autre ;
- l'agencement comporte un dispositif de commande commun aux deux coins extérieurs supérieur et inférieur pour permettre leur serrage simultané ;
- le dispositif de commande comporte au moins une vis de commande qui est vissée dans un écrou qui est monté coulissant verticalement dans le berceau, le coulissement de la vis de commande vers le bas sollicitant l'organe de transmission associé à l'un des coins extérieurs vers sa position serrée, tandis que le coulissement de l'écrou vers le haut sollicite l'organe de transmission associées à l'autre des coins extérieurs vers sa position serrée par l'intermédiaire de moyens de renvoi d'effort, le serrage des coins extérieurs étant ainsi réalisé simultanément par vissage de la vis de commande dans l'écrou ;
- les moyens de renvoi d'effort sont formés par au moins une came solidaire en coulissement de l'écrou et par au moins un poussoir guidé en déplacement le long d'une trajectoire en arc de cercle dans le berceau, la came étant apte à écarter un suiveur de came du poussoir de l'axe de la vis de commande en provoquant le coulissement d'une extrémité inférieure du poussoir vers le bas pour pousser l'organe de transmission associé ;
- le dispositif commande comporte deux cames et deux poussoirs disposés symétriquement par rapport à l'axe de la vis de commande.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une vue en perspective qui représente un panneau fixé dans un rail monté en bordure d'une dalle en béton, le panneau étant fixé au moyen d'un dispositif de fixation réalisé selon un premier mode de réalisation de l'invention ;
La figure 2 est une vue en perspective éclatée qui représente, le rail, le dispositif de fixation et le panneau de la figure 1 ;
La figure 3 est une vue en perspective qui représente le dispositif de fixation de la figure 1 seul ;
La figure 4 est une vue en perspective éclatée qui représente les composants du dispositif de fixation de la figure 3 ;
La figure 5 est une vue en coupe transversale selon le plan de coupe 5-5 de la figure 3 qui représente les coins intérieurs du dispositif de fixation pendant leur serrage ;
La figure 6 est une vue en perspective avec coupe qui représente le dispositif de fixation de la figure 5 ;
La figure 7 est une vue en coupe selon le plan de coupe 7-7 de la figure 3 qui représente le dispositif de commande du serrage du coin extérieur inférieur pendant son serrage ;
La figure 8 est une vue en coupe selon le plan de coupe 8-8 de la figure 3 qui représente le coin extérieur inférieur pendant son coulissement contre une rampe du berceau ;
La figure 9 est une vue en perspective avec coupe selon le plan de coupe 8-8 dans laquelle le berceau n'a pas été représenté pour permettre de mieux voir le dispositif de commande de serrage du coin extérieur inférieur ;
La figure 10 est une vue en perspective avec coupe selon le plan de coupe 7-7 ;
La figure 11 est une vue en coupe transversale selon le plan de coupe 11-11 de la figure 3 qui représente le coin extérieur supérieur dans une position desserrée ;
La figure 12 est une vue similaire à celle de la figure 11 qui représente le coin extérieur supérieur en position serrée ;
La figure 13 est une vue en perspective avec coupe selon le plan de coupe 11-11 ;
La figure 14 est une vue de dessus de la figure 1 ;
La figure 15 est une vue en perspective éclatée qui représente un rail et un dispositif de fixation du panneau réalisé selon un deuxième mode de réalisation de l'invention ;
La figure 16 est une vue en perspective éclatée qui représente les composants du dispositif de fixation de la figure 15 ;
La figure 17 est une vue en coupe transversale selon le plan de coupe 17-17 de la figure 15 qui représente le dispositif de commande agissant sur le coin extérieur supérieur ;
La figure 18 est une vue en perspective qui représente uniquement une moitié intérieure du berceau et le dispositif de commande du serrage du coin extérieur inférieur ;
La figure 19 est une vue en perspective qui représente uniquement les coins extérieurs et le dispositif de commande de leur serrage, le berceau n'étant pas représenté pour permettre de mieux visualiser le fonctionnement du dispositif de commande.

### Description détaillée de l'invention

Dans la suite de la description, on adoptera à titre non limitatif des orientations longitudinale, verticale et transversale indiquées par le trièdre "L,V,T" des figures.

Dans la suite de la description, des éléments présentant une structure identique ou des fonctions analogues seront désignés par une même référence.

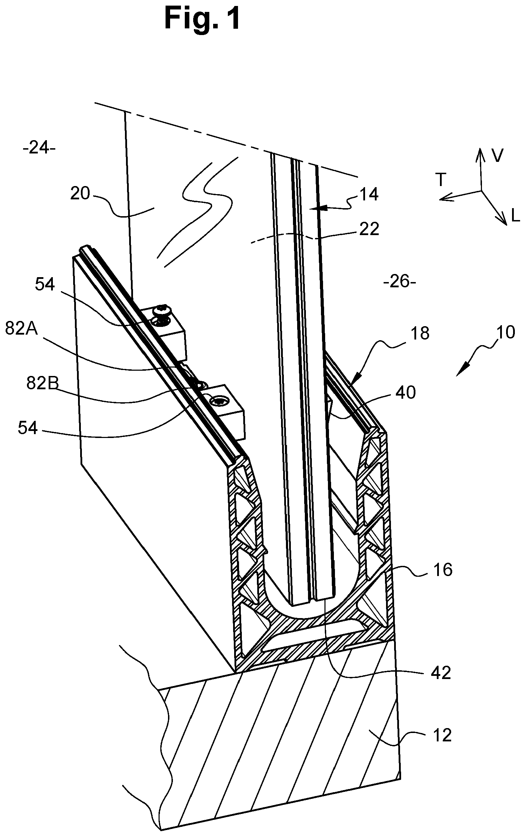

On a représenté à la figure 1 un garde-corps 10 qui est monté en bordure d'une dalle 12, par exemple une dalle de béton. La bordure de la dalle 12 est ici difficilement accessible, elle est par exemple agencée en altitude.

Le garde-corps 10 comporte un panneau 14 vertical et un rail 16 de support. Le panneau 14 est préférentiellement en verre. Il est maintenu verticalement dans le rail 16 de support par plusieurs dispositifs 18 de fixation qui sont répartis sur la longueur du rail 16. Seul un tronçon de rail 16 comportant un seul dispositif 18 de fixation est représenté à la figure 1. Chaque dispositif 18 de fixation est conçu pour permettre de fixer fermement le panneau 14 dans une position verticale et pour résister à des charges très importantes.

Le panneau 14 est délimité transversalement par une face intérieure 20 qui est tournée du côté accessible du rail 16, et par une face extérieure 22 qui est tournée du côté inaccessible du rail 16. Le panneau 14 en position montée divise ainsi l'espace en un côté intérieur 24 accessible et en un côté extérieur 26 inaccessible. Pour la suite de la description, des éléments situés du côté intérieur du panneau 14 seront qualifié par l'adjectif "intérieur", tandis que des éléments situés du côté extérieur seront qualifiés par l'adjectif "extérieur".

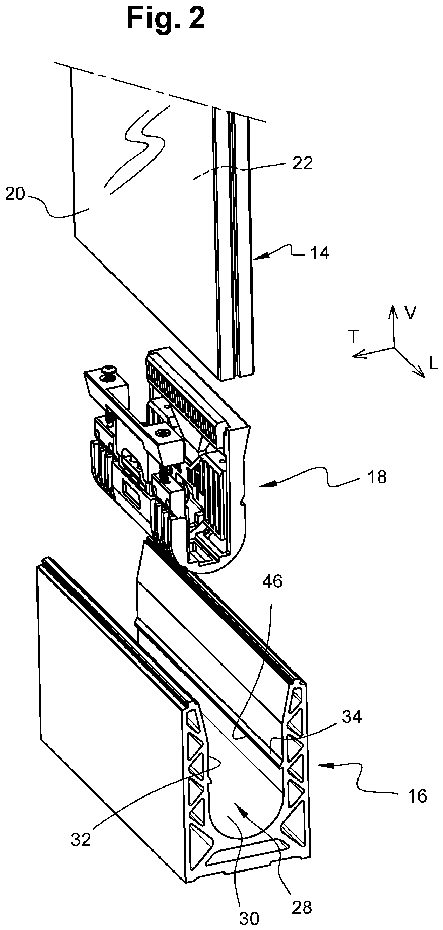

Comme cela est illustré plus en détail à la figure 2, le rail 16 de support est formé à titre d'exemple par un profilé en aluminium, ayant ici une section transversale en "U" délimitant une rainure 28 de réception du panneau 14 et du dispositif 18 de fixation. Le rail 16 de support s'étend de manière continue dans la direction longitudinale. Le rail 16 de support est destiné à être fixé à la dalle 12 préalablement au montage du panneau 14.

La rainure 28 présente, en vue de profil, un fond 30 de forme courbe concave, de préférence semi-circulaire, prolongée verticalement vers le haut par une face latérale intérieure 32, d'une part, et par une face latérale extérieure 34, d'autre part, qui sont agencées transversalement en vis-à-vis l'une de l'autre. La rainure 28 présente une ouverture supérieure. La largeur de la rainure 28 entre les deux faces latérales 32, 34 est supérieure à l'épaisseur du panneau 14. La première face latérale intérieure 32 est située du côté intérieur 24, tandis que la deuxième face latérale extérieure 34 est située du côté extérieur 26.

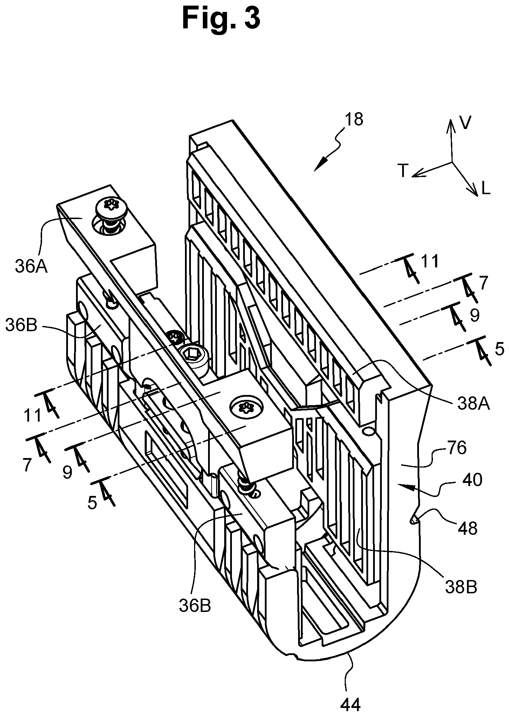

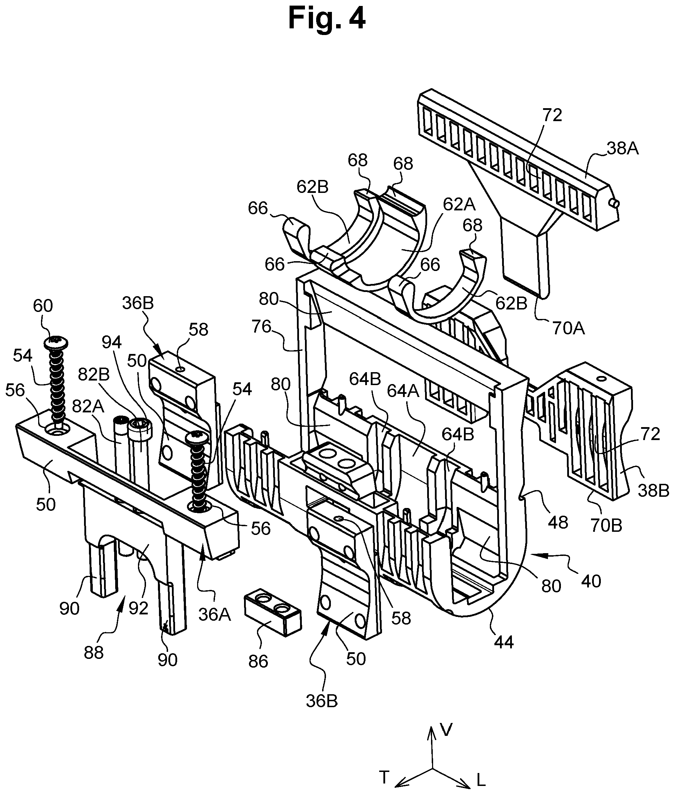

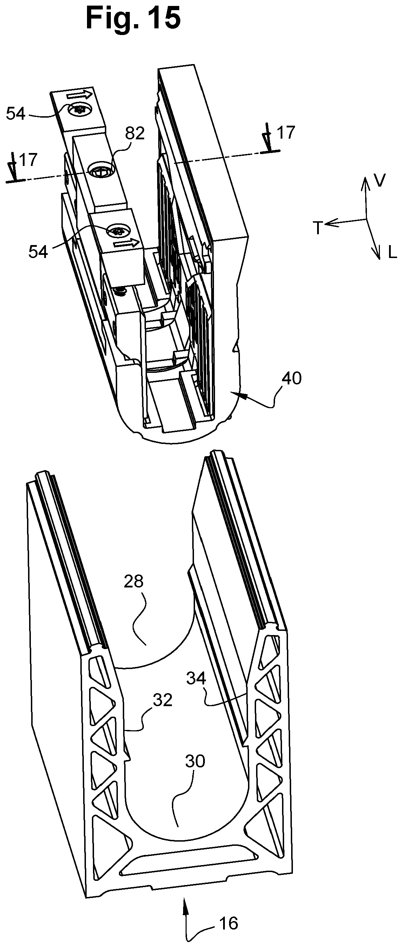

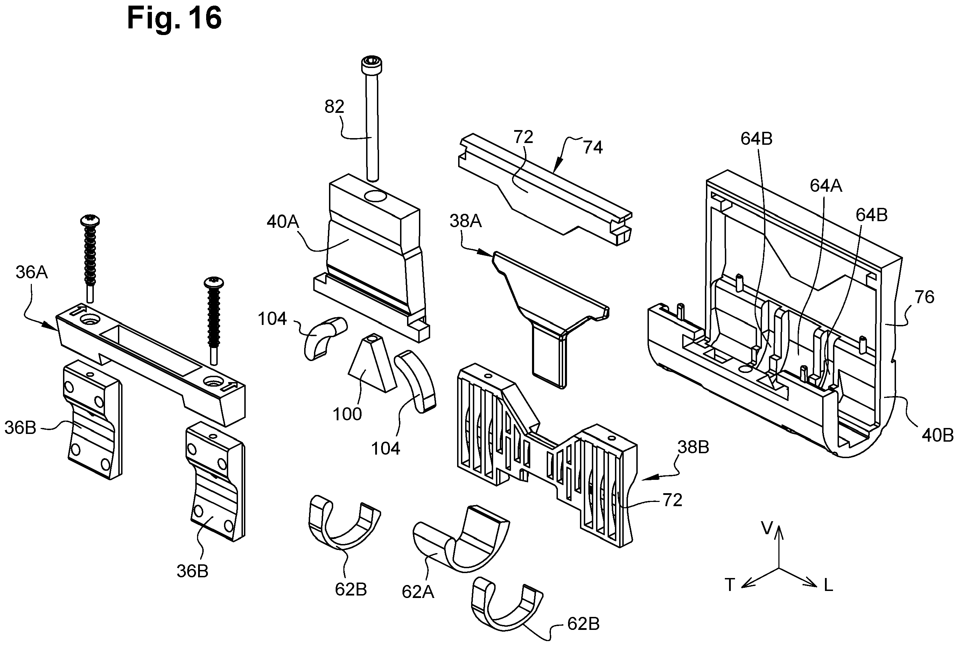

Chaque dispositif 18 de fixation est conçu comme un module formé de plusieurs pièces dont certaines peuvent être préassemblées avant leur insertion dans la rainure 28. On décrit à présent un dispositif 18 de fixation en référence aux figures 3 et 4 ainsi qu'aux figures 15 et 16.

Le dispositif 18 de fixation comporte au moins un coin intérieur 36A, 36B et au moins deux coins extérieurs 38A, 38B opposés qui sont destinés à serrer transversalement le panneau 14 dans la rainure 28 longitudinale de réception.

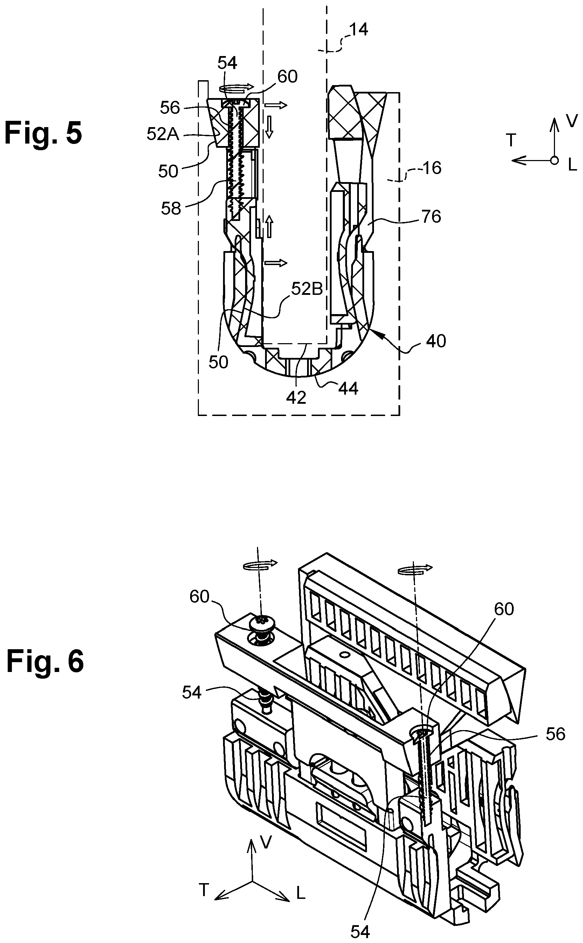

Le dispositif 18 de fixation comporte aussi un berceau 40 dont le profil forme un "U". Le berceau 40 qui est conçu pour enfourcher un chant 42 inférieur du panneau 14, comme cela est représenté aux figures 1 et 5. Le berceau 40 présente une face 44 inférieure arrondie de forme complémentaire à celle du fond 30 de la rainure 28 de réception. Le berceau 40 est reçu dans la rainure 28 avec un jeu transversal suffisant pour permettre un débattement angulaire du panneau 14 autour d'un axe longitudinal par glissement de la face inférieure 44 du berceau 40 contre le fond 30. Ceci permet de régler la verticalité du panneau 14 en fonction de l'horizontalité de la dalle 12 par pivotement du berceau 40. Le panneau 14 est reçu dans le berceau 40 avec un jeu transversal qui lui permet aussi pivoter légèrement par rapport au berceau 40 pour ajuster sa verticalité.

Chaque face latérale 32, 34 de la rainure 28 comporte en outre une butée 46 en saillie qui est destiné à retenir verticalement le berceau 40 en fond de rainure 28 par coopération avec un cran 48 réalisé dans une face verticale externe du berceau 40.

Le berceau 40 est ici réalisé en matière plastique rigide.

Au moins un coin intérieur 36A ou 36B du dispositif 18 de fixation est interposé entre la face intérieure 32 de la rainure 28 et la face intérieure 20 du panneau 14, comme cela est illustré à la figure 5. Le coin intérieur 36A ou 36B présente au moins une face 50 inclinée qui est destinée à coopérer avec une rampe 52 dont la position verticale est fixe pour permettre son serrage par coulissement vertical. Dans les exemples illustrés aux figures, la rampe 52 est solidaire soit du rail 16 de support, comme cela est représenté en haut de la figure 5, soit du berceau 40, comme cela est représenté en bas de la figure 5.

Dans les modes de réalisation représentés aux figures, le dispositif 18 de fixation comporte plusieurs coins intérieurs 36A, 36B. Il comporte ainsi, de manière non limitative, un coin intérieur 36A supérieur et deux coins intérieurs 36B inférieurs.

Le coin intérieur 36A supérieur coopère avec une rampe 52A qui est formé dans la partie supérieure de la première face 24 de la rainure 20. La rampe 52A est conçue pour que le serrage du coin intérieur 36A supérieur entre le panneau 14 et la face 32 intérieure de la rainure 28 se produise lors de son coulissement vers le bas. Le coin intérieur 36A supérieur comporte ici une face de serrage qui est destinée à être serrée soit directement contre le panneau 14, soit avec interposition d'une cale.

Les coins intérieurs 36B inférieurs coopèrent chacun avec une rampe 52B associée du berceau 40 qui prend appui transversalement contre la face intérieure 32 de la rainure 28. Les coins intérieurs 36B inférieurs sont plus particulièrement interposés entre la rampe 52B et la face intérieure 20 le panneau 14. La rampe 52B est conçue pour que le serrage du coin intérieur 36B inférieur entre le panneau 14 et la face intérieure 32 de la rainure 28 se produise lors de son coulissement vers le haut. Chaque coin intérieur 36B inférieur comporte ici une face de serrage qui est destinée à être serrée soit directement contre le panneau 14 soit avec interposition d'une cale.

Le coulissement du coin intérieur 36A supérieur et celui de chaque coin intérieur 36B inférieur est réalisé au moyen de deux vis 54 de commande d'axe vertical. Chaque vis 54 de commande est reçue dans un orifice 56 lisse associé percé dans le coin intérieur 36A supérieur au droit de chaque coin intérieur 36B inférieur. L'extrémité inférieure de chaque vis 56 de commande est vissée dans un orifice 58 de chaque coin intérieur 36B inférieur. La vis 54 de commande est par exemple vissée à force dans l'orifice 58. En variante l'orifice 58 est taraudé. En tous les cas, la vis 54 de commande est en prise avec le coin intérieur 36B inférieur associé.

Ainsi, lorsque les vis 54 sont vissées, les coins intérieurs 36B inférieurs, bloqués en rotation par le berceau 40 et le panneau 14, coulissent vers le haut jusqu'à une position serrée dans laquelle ils sont coincés entre la rampe 52B et le panneau 14. En poursuivant le vissage, une tête 60 de la vis 54 de commande prend appui sur le coin intérieur 36A supérieur pour le faire coulisser vers le bas jusqu'à être coincé entre la face intérieure 32 de la rainure 28 et le panneau 14. Le vissage peut être poursuivi jusqu'à ce que les coins intérieurs 36A, 36B soient serrés avec l'effort vertical désiré pour obtenir la fixation verticale du panneau 14. Outre la rapidité de fixation, ce système de réglage de la position du coin intérieur 36A supérieur et de chaque coin intérieur 36B inférieur avec une même vis 54 de commande permet d'équilibrer l'effort de serrage appliqué par chaque coin intérieur 36A, 36B contre le panneau 14.

Les coins extérieurs 38A, 38B comprennent au moins un coin extérieur 38A supérieur et au moins un coin extérieur 38B inférieur. Le coin extérieur 38A supérieur est ainsi agencé au-dessus du coin extérieur 38B dans la rainure 28. Chaque coin extérieur 38A, 38B est interposé entre la face latérale extérieure 34 de la rainure 28 et la face extérieure 22 du panneau 14. Chaque coin extérieur 38A, 38B est monté coulissant verticalement entre une position desserrée et une position serrée entre la face latérale 34 extérieure de la rainure 28 et la face extérieure 22 du panneau 14. Les coins extérieurs 38A, 38B sont montés coulissants entre leur position desserrée et leur position serrée indépendamment les uns des autres.

Il est prévu de pouvoir régler le serrage des coins extérieurs 38A, 38B depuis le côté intérieur 24 du panneau 14. A cet effet, le dispositif 18 de fixation comporte au moins deux organes 62A, 62B de transmission d'effort mobiles qui sont interposés entre le chant 42 inférieur du panneau 14 et le fond 30 inférieur de la rainure 28. Les organes 62A, 62B de transmission d'effort sont chacun aptes à transmettre un effort de coulissement à un coin extérieur 38A, 38B associé depuis le côté intérieur 24.

Selon les enseignements de l'invention, les coins extérieurs supérieur 38A et inférieur 38B coulissent tous les deux verticalement vers le haut depuis leur position desserrée inférieure vers leur position serrée supérieure qui est située au-dessus de leur position desserrée. Ainsi, pour commander les coins extérieurs 38A, 38B vers leur position serrée supérieure, les organes 62A, 62B de transmission mobiles sont sollicités en compression par au moins un dispositif 63 de commande qui est agencé du côté intérieur 24 du panneau 14.

Dans les exemples de réalisation représentés aux figures, chaque organe 62A, 62B de transmission mobile est formé par un élément rigide présentant la forme d'un segment semi-circulaire qui est reçu coulissant dans un canal 64A, 64B de forme complémentaire agencé entre le chant 42 inférieur du panneau 14 et le fond 30 inférieur de la rainure 28. Tous les organes 62A, 62B de transmission présentent ici une forme semi-circulaire de même rayon de courbure.

Chaque organe 62A, 62B de transmission comporte ainsi une extrémité 66 transversale intérieure et une extrémité 68 transversale extérieure. Les deux extrémités 66, 68 présente toute deux une face tournée verticalement vers le haut.

Les organes 62A, 62B de transmission sont montés en parallèles les uns par rapport aux autres. Chaque canal 64A, 64B est réalisé dans un fond du berceau 40 de réception du chant 42 du panneau 14. Ainsi, chaque organe 62A, 62B de transmission est reçu glissant sur le fond du berceau 40, sous le panneau 14, et non contre le fond 30 de la rainure 28.

L'extrémité extérieure 68 de chaque organe 62A, 62B de transmission est destiné à être appuyé verticalement contre une face 70A, 70B de poussée du coin 38A, 38B extérieur associé, tandis que l'extrémité intérieure 66 est destinée à être sollicitée par un effort sensiblement vertical fourni par un dispositif 63 de commande associé, comme cela sera expliqué plus en détails par la suite.

Les extrémités 68 extérieures des organes 62A, 62B de transmission sont agencées sensiblement à la même hauteur du fait de la forme semi-circulaire des organes de transmission. A cet égard, les faces 70A, 70B de poussée des coins 38A, 38B extérieurs sont ici agencées à la même hauteur. Ainsi, le coin 38A extérieur supérieur présente une patte qui s'étend verticalement vers le bas dans un passage ménagé dans le coin extérieur 38B inférieur jusqu'à l'organe 62A de transmission associé.

En variante, un élément de poussée coulissant verticalement est intercalé entre la face extérieure 68 de l'organe 62A de transmission et le coin 38A extérieur supérieur.

A titre d'exemple non limitatif, et comme cela est représenté aux figures, un unique organe 62A de transmission commande le coulissement du coin 38A extérieur supérieur tandis que le coin 38B extérieur inférieur est commandé en coulissement par l'intermédiaire de deux organes 62B de transmission. L'organe 62A de transmission associé au coin 38A extérieur supérieur est ici agencé entre les deux organes 62B de transmission associés au coin 38B extérieur inférieur.

Au moins un des coins extérieurs 38A, 38B peut se déplacer transversalement en direction du panneau 14 lors de son coulissement vertical vers sa position serrée. Dans ce cas, le coin extérieur 38A, 38B comporte une face 72 longitudinale de serrage qui est tournée vers le panneau 14 comme cela est illustré pour les deux coins extérieurs représentés dans le mode de réalisation des figures 1 à 13.

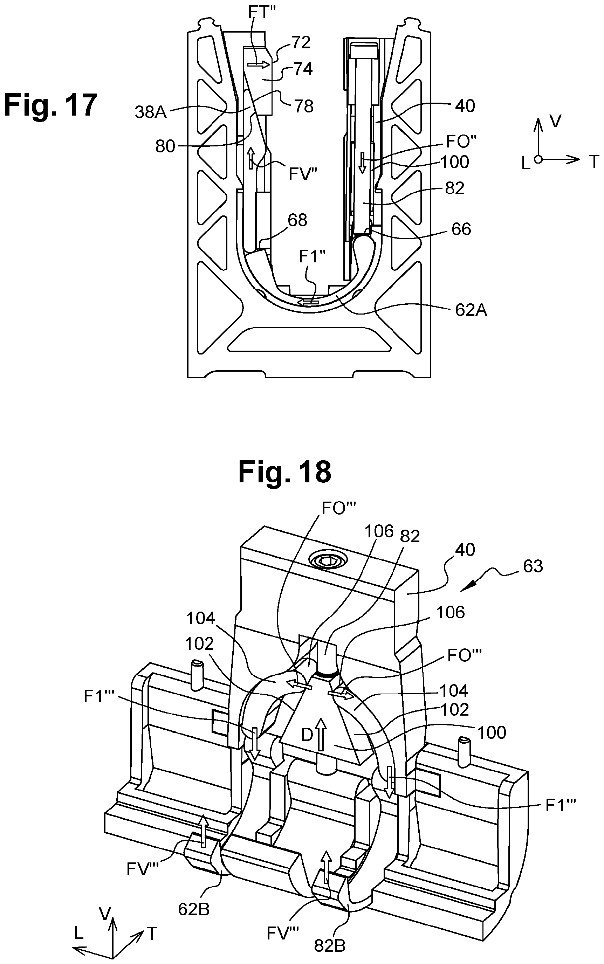

En variante, représentée aux figures 16 et 17, au moins un coin extérieur 38A se déplace uniquement verticalement lors de son coulissement vers sa position de serrage. Dans ce cas, au moins un patin 74 de serrage distinct du coin extérieur 38A associé est interposé entre ledit coin extérieur 38A et la face extérieure 22 du panneau 14. Dans ce cas, la face 72 de serrage est portée par le patin de serrage 74. Le patin de serrage 74 est reçu coulissant transversalement dans le berceau 40 entre une position desserrée dans laquelle sa face 72 de serrage est écartée du panneau 14, et une position serrée dans laquelle sa face de serrage 72 est poussée contre le panneau 14 par le coin extérieur 38A, 38B associé en position serrée. Cette variante est applicable indifféremment aux différents modes de réalisation décrits par la suite.

Quel que soit le mode de réalisation du coin extérieur, la face de serrage 72 peut être serrée soit directement au contact de la face extérieure 22 du panneau 14, soit avec interposition d'une cale entre la face de serage 72 et la face 22 extérieure du panneau 14. Cette cale de serrage permet d'adapter un même dispositif 18 de fixation à différentes épaisseurs de panneaux 14. L'épaisseur de la cale de serrage sera ainsi adaptée à l'épaisseur du panneau 14 à fixer.

Dans les modes de réalisations représentés aux figures, chaque coin extérieur 38A, 38B est interposé entre une aile 76 extérieure du berceau 40 et la face extérieure 22 du panneau 14. L'aile 76 extérieure du berceau 40 est agencée contre la face extérieure 34 de la rainure 28 et elle s'étend dans un plan longitudinal vertical jusqu'à proximité de l'ouverture de la rainure 28.

Pour permettre le serrage transversal du panneau 14 lors de leur coulissement vertical vers le haut, au moins l'un parmi le coin 38A, 38B extérieur ou la face interne de l'aile 76 extérieure du berceau 40 comporte une rampe de serrage qui pousse la face 72 de serrage transversalement vers le panneau 14 lors du coulissement du coin 38A, 38B extérieur associé vers sa position serrée.

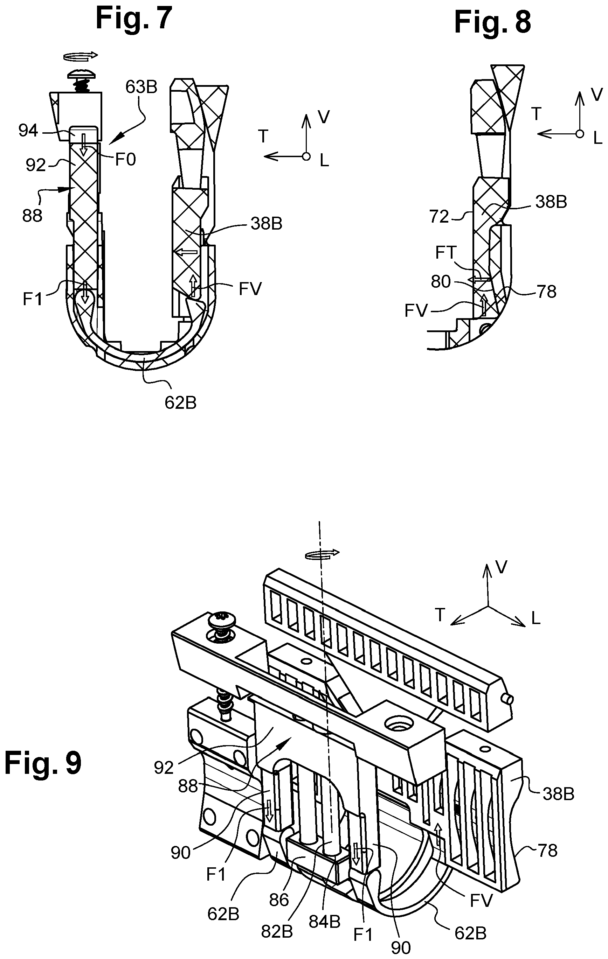

Dans les exemples représentés aux figures 7 à 13, lorsque le coin 38A, 38B extérieur comporte la face 72 de serrage, il comporte une rampe 78 qui coopère par glissement avec une rampe 80 complémentaire formée dans l'aile 76 extérieure du berceau 40. En ce cas, le coin 38A, 38B extérieur se déplace à la fois verticalement et transversalement vers le panneau 14 lors de son déplacement vers sa position serrée.

En variante représentée à la figure 17, lorsque le coin 38A extérieur, ici supérieur, est distinct du patin 74 comportant la face 72 de serrage, le coin 38A extérieur comporte une rampe 78 qui coopère par glissement avec une rampe 80 complémentaire portée par le patin 74 de serrage. En ce cas, le coin 38A extérieur peut se déplacer purement verticalement par rapport au berceau 40.

Selon un premier mode de réalisation de l'invention qui est représenté aux figures 1 à 12, l'agencement comporte deux dispositifs 63A, 63B de commande distincts pour commander indépendamment le coulissement de chaque coin extérieur.

Chaque dispositif 63A, 63B de commande comporte ici au moins une vis 82A, 82B qui est apte à solliciter au moins un organe 62A, 62B de transmission. Chaque vis 82A, 82B est vissée dans un taraudage 84A, 84B qui est fixe par rapport au berceau 40 pour permettre le déplacement axial de la vis 82A, 82B par rapport au berceau 40 par vissage ou dévissage. Dans l'exemple représenté à la figure 4, le taraudage 84A, 84B est réalisé dans un écrou 86 qui est monté fixe dans le berceau 40 du côté intérieur du panneau 14.

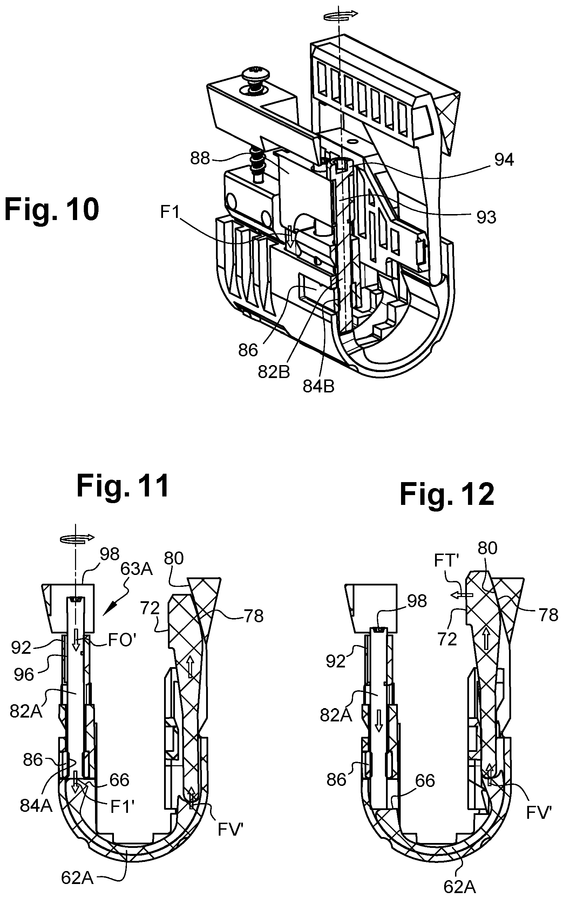

Comme cela est représenté en détails aux figures 4, et 7 à 10, le dispositif 63B de commande associé au coin 38B extérieur inférieur comporte ainsi une première vis 82B de commande d'axe sensiblement vertical dont une portion filetée d'extrémité inférieure est reçue dans un taraudage 84B fixe associé. Le dispositif 63B de commande comporte aussi un cavalier 88 qui permet de commander simultanément les deux organes 62B de transmission associés au coin 38B extérieur inférieur au moyen d'une seule vis 82B de commande. Le cavalier 88 comporte deux jambes 90 verticales inférieures qui partent des deux extrémités longitudinales d'un corps 92 supérieur. Le cavalier 88 enjambe l'organe 62A de transmission associé au coin 38A extérieur supérieur qui est situé entre les deux organes 62B de transmission associés au coin 38B extérieur inférieur, comme cela est visible à la figure 9. Le cavalier 88 est guidé en coulissement vertical dans le berceau 40, chacune de ses deux jambes 90 étant agencée au droit des extrémités 66 intérieures des organes 62B de transmission associés. Le taraudage 84B est agencé entre les deux jambes 90. Le corps 92 du cavalier est percé d'un orifice 93 lisse dans lequel la tige de la vis 82B de commande est reçue coulissante librement, comme représenté à la figure 10. La vis 82B de commande comporte une tête 94 qui est destinée à venir en appui contre une face supérieure du corps 92 lorsqu'elle est vissée pour pousser le cavalier 88 vers le bas, comme indiqué par les flèches "F0" des figures 7 à 10, afin que les deux jambes 90 sollicitent chacune l'organe 62B de transmission associé, comme illustré par les flèches "F1" des figures 7 et 9. Les organes 62B de transmission coulissent ainsi pour que leur extrémité 68 extérieure pousse le coin 38B extérieur inférieur vers le haut en direction de sa position serrée, comme indiqué par les flèches "FV" des figures 7 à 10. La rampe 78 du coin 38B extérieur inférieur glisse alors contre la rampe 80 pour pousser transversalement sa face 72 de serrage contre le panneau 14 comme indiqué par la flèche "FT" de la figure 8.

La longueur de la vis 82B de commande est déterminée de manière à ne pas venir solliciter l'organe 62A de transmission associé au coin 38A extérieur supérieur lorsque le coin 38B extérieur inférieur est dans sa position serrée, comme cela est représenté à la figure 9.

En se référant à présent aux figures 4 et 10 à 13, un deuxième dispositif 63A de commande est associé au coin 38A extérieur supérieur. Il comporte une deuxième vis 82A de commande d'axe sensiblement vertical qui est reçue libre en coulissement dans un orifice 96 lisse du corps 92 du cavalier 88. Un tronçon fileté de la vis 82A de commande est vissé dans un deuxième taraudage 84A fixe par rapport au berceau 40 qui est agencé au droit de l'extrémité intérieure 66 de l'organe 62A de transmission associé au coin 38A extérieur supérieur. La vis 82A de commande est ici une vis sans tête qui est ainsi susceptible d'être vissée sans appuyer sur le corps 92 du cavalier. La vis 82A de commande comporte une empreinte à son extrémité 98 supérieure qui lui permet d'être vissée au moyen d'un outil (non représenté) muni d'un embout approprié.

La longueur de la vis 82A de commande est suffisante pour qu'une extrémité inférieure de la vis 82A de commande vienne solliciter l'extrémité intérieure 66 de l'organe 62A de transmission lors de son vissage tandis que son empreinte reste accessible à un outil de serrage, comme cela est représenté à la figure 11.

Lors de la fixation du panneau 14, la vis 82A de commande est vissée dans l'écrou 86, ce qui entraîne sa descente, comme indiqué par la flèche "F0'" de la figure 10. Son extrémité inférieure pousse alors vers le bas contre la face intérieure 66 de l'organe 62A de transmission, comme indiqué par la flèche "F1'" de la figure 10. Ceci provoque le coulissement de l'organe 62A de transmission dont l'extrémité extérieure 68 pousse le coin 38A extérieur supérieur vers le haut pour le faire passer de sa position desserrée, représentée à la figure 10, jusqu'à sa position serrée, comme indiqué à la figure 11. L'organe 62A de transmission transmet ainsi un effort "FV'" de coulissement orienté vers le haut. Lors de son coulissement vers le haut, la rampe 78 du coin 38A extérieur supérieur glisse contre la rampe 80 du berceau 40 pour pousser transversalement la face 72 de serrage contre le panneau 14 avec un effort "FT"', comme représenté à la figure 11.

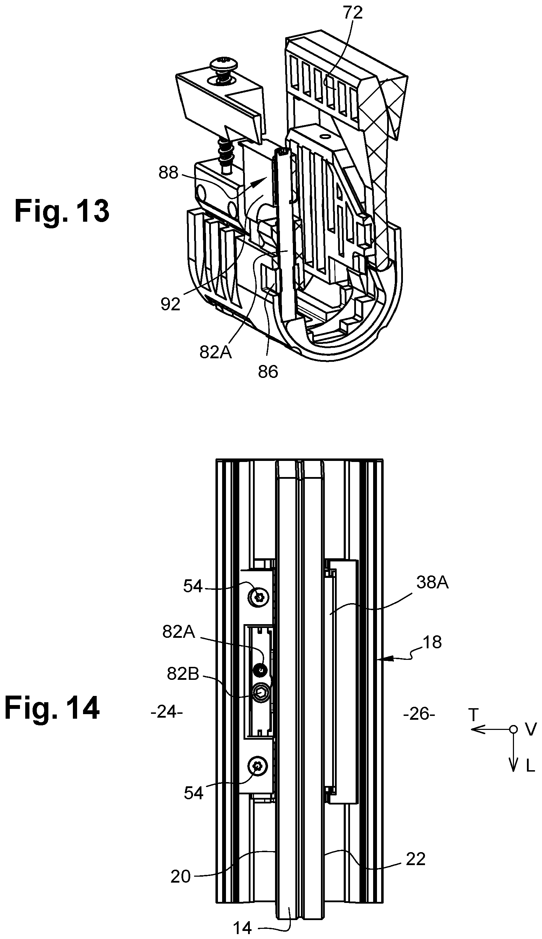

Comme cela est représenté à la figure 14, les deux vis 82A, 82B de commande sont situées du côté intérieur 24 du panneau 14 pour permettre de serrer les coins 38A, 38B extérieurs depuis le côté intérieur 24.

Selon un deuxième mode de réalisation de l'invention qui est représenté aux figures 15 à 19, le dispositif 18 de fixation comporte un dispositif 63 de commande commun aux deux coins 38A, 38B extérieurs pour permettre le serrage simultané des deux coins 38A, 38B extérieurs de manière similaire à ce qui a été décrit pour les coins 36A, 36B intérieurs. Ce dispositif 63 de commande permet notamment d'équilibrer automatiquement les efforts de serrage des coins 38A, 38B extérieurs inférieur et supérieur. Bien entendu, comme pour le premier mode de réalisation, la vis 82 de commande est située du côté intérieur du panneau.

Le dispositif 63 de commande comporte au moins une vis 82 de commande d'axe vertical qui est vissée dans un écrou 100 qui est monté coulissant verticalement du côté intérieur du berceau 40. Le berceau 40 est ici réalisé en une moitié 40A intérieure et une moitié 40B extérieure qui peuvent être assemblées ensemble par emboîtement transversal.

La vis 82 de commande est agencée au droit de l'extrémité intérieure 66 de l'organe 62A de transmission associé au coin 38A extérieur supérieur. Ainsi, lors du déplacement de la vis 82 de commande vers le bas, comme indiqué par la flèche F0" de la figure 17, son extrémité inférieure est susceptible de solliciter l'extrémité intérieure 66 de l'organe 62A de transmission associé au coin 38A extérieur supérieur vers sa position serrée. L'organe 62A de transmission coulisse alors, comme indiqué par la flèche F1" de manière que son extrémité extérieure 68 applique un effort FV" sur le coin 38A extérieur supérieur. Le glissement de la rampe 78 du coin 38A extérieur supérieur contre la rampe 80 du patin 74 de serrage applique une force FT" transversale de serrage du patin 74 contre le panneau 14.

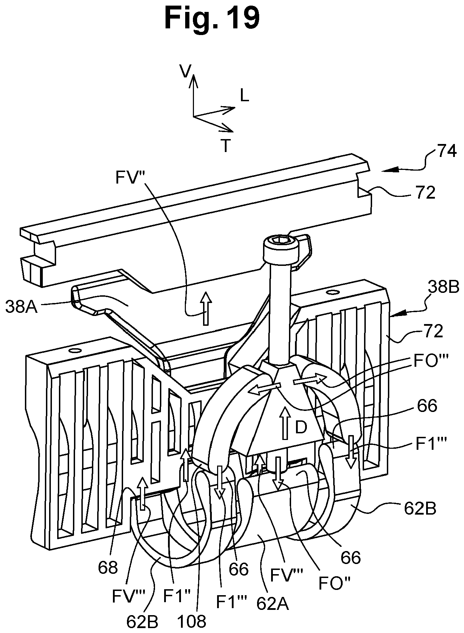

En outre, comme cela est représenté aux figures 18 et 19, l'écrou 100 est susceptible de coopérer avec des moyens de renvoi d'efforts. Ainsi lors du coulissement de l'écrou 100 vers le haut, par vissage de la vis 82 de commande, les organes 62B de transmission associés au coin 38B extérieur inférieur sont sollicités vers leur position serrée par l'intermédiaire des moyens de renvoi d'effort.

Dans l'exemple représenté aux figures, les moyens de renvoi d'effort sont formés par au moins une came 102 solidaire en coulissement de l'écrou 100 et par au moins un poussoir 104 guidé en déplacement le long d'une trajectoire en arc de cercle dans le berceau 40. La came 102 est ici agencée sur au moins un flanc transversal de l'écrou 100 pour écarter un suiveur 106 de came du poussoir 104 de l'axe de la vis 82 de commande lorsque l'écrou 100 se déplace vers le haut par rapport au poussoir 104 comme indiqué par la flèche "D". La came 104 applique ainsi un effort F0‴ transversal sur le suiveur 106 de came du poussoir 104, comme cela est représenté à la figure 18.

Ceci provoque le coulissement d'une extrémité 108 inférieure du poussoir 104 vers le bas pour pousser l'extrémité 66 intérieure de l'organe 62B de transmission associé vers le bas, comme indiqué par la flèche F1‴. Ceci provoque le coulissement de l'organe 62B de transmission dont l'extrémité extérieure 68 applique un effort FV‴ vertical dirigé vers le haut sur le coin 38B extérieur inférieur.

Comme représenté à la figure 16, le poussoir 104 se présente sous la forme d'un segment en forme d'arc de cercle s'étendant sur un quart de cercle, avantageusement dans un plan longitudinal vertical afin d'être le moins encombrant possible. Un bord concave du poussoir 104 est tourné en direction de l'axe de la vis 82 de commande. L'extrémité supérieure du poussoir 104 est tournée longitudinalement vers la vis 82 de commande pour former le suiveur 106 de came, tandis que son extrémité 108 inférieure est agencée au contact de l'extrémité 66 intérieur d'un des organes 62B de transmission associés au coin 38B extérieur inférieur.

Etant donné que la came 102 est susceptible d'appliquer sur la vis 82 de commande un effort de réaction radial, le dispositif 63 de commande comporte avantageusement deux cames 102 opposées agencées sur deux flancs opposés de l'écrou 100. Deux poussoirs 104 tels que décrit précédemment sont disposés symétriquement par rapport à un plan transversal passant par l'axe de la vis 82 de commande pour coopérer chacun avec l'une des cames 102. Chaque poussoir 104 permet ainsi d'entraîner un organe 62B de transmission associé. Ceci permet avantageusement d'équilibrer les efforts de réaction appliqués radialement sur la vis 82 de commande.

La vis 82 de commande est montée libre en coulissement par rapport au berceau 40. Ceci permet de réaliser un serrage simultané et équilibré des deux coins 38A, 38B extérieurs au moyen de la seule vis 82 de commande.

Lors du serrage des coins 38A, 38B extérieurs, la vis 82 de commande est vissée dans l'écrou 100. Cela provoque un écartement vertical entre l'écrou 100 et l'extrémité inférieure de la vis 82 de commande.

Ainsi, l'extrémité inférieure de la vis 82 de commande applique un effort vertical F0" dirigé vers le bas sur l'extrémité intérieure 66 de l'organe 38A de transmission qui tend à pousser le coin 38A extérieur supérieur vers le haut. Le glissement de la rampe 78 du coin 38A extérieur supérieur contre la rampe 80 du patin 74 de serrage provoque le déplacement du patin 74 de serrage jusqu'à ce que sa face 72 de serrage soit serrée contre le panneau 14.

En réaction, l'écrou 100 se déplace vers le haut. L'écrou 100 applique alors un effort dirigé vers le haut aux cames 102, ce qui tend à écarter simultanément les poussoirs 104 de l'axe de la vis 82 de commande. Les extrémités 108 inférieures des poussoirs 104 sont en butée contre les extrémités 66 intérieures des organes 62B de transmission associés qui coulissent pour venir solliciter le coin 38B extérieur inférieur vers sa position serrée. La rampe 72 du coin 38B extérieur inférieur glisse alors contre la rampe 80 du berceau pour déplacer la face 72 de serrage transversalement vers le panneau 14.

En poursuivant le vissage de la vis 82 de commande, les coins 38A, 38B extérieurs inférieur et supérieur sont simultanément serrés de manière que les forces appliquées par l'écrou 100 d'une part et la vis 82 de commande d'autre part s'équilibrent. Les deux 38A, 38B coins extérieurs sont ainsi serrés sensiblement de la même manière et l'effort appliqué par les faces 72 de serrage contre le panneau 14 sont sensiblement équilibrés.

Quel que soit le mode de réalisation sélectionné, lors de la fixation du panneau, les dispositifs 18 de fixation sont insérés dans la rainure 28 du rail 16 avec leurs coins intérieurs et extérieurs en position desserrée. Puis le panneau 14 est positionné dans la rainure de manière que son chant 42 repose sur les berceaux 40. Ensuite, le panneau 14 est maintenu dans la position verticale désirée, puis les vis de commande de chacun des coins intérieurs et extérieurs sont vissées les unes après les autres jusqu'à ce que chaque coin occupe une position serrée permettant la fixation du panneau 14 dans sa position verticale. Lorsque les deux coins 38A, 38B extérieurs sont en position serrée, ils sont maintenus dans cette position par la vis 82 de commande, chaque organe 62A, 62B de transmission étant comprimé entre le coin 38A, 38B extérieur associé et la vis 82 de commande associée.

L'invention permet ainsi avantageusement de commander les deux coins 38A, 38B extérieurs dans leur position serrée depuis le côté intérieur 24 du panneau 14.

En outre, l'usage d'organe de transmission fonctionnant en compression pour maintenir le coin extérieur associé en position serrée permet de garantir un maintien solide et durable dans le temps, sans risque de fluage du matériau. En outre, les organes de transmission peuvent être réalisés en des matériaux peu coûteux que des matériaux plastiques rigides résistants en compression.

## Revendications

1. Agencement pour la fixation d'un panneau (14) vertical dans une rainure (28) longitudinale ouverte verticalement vers le haut pour la réception d'un chant (42) inférieure du panneau (14),
le panneau (14) comportant une face (20) intérieure et une face (22) extérieure, la fixation étant réalisée par serrage transversal entre des coins (36A, 36B ; 38A, 38B) opposés transversalement, l'agencement comportant :
- au moins un premier coin (38A) extérieur supérieur et au moins un deuxième coin (38B) extérieur inférieur qui sont chacun interposés entre une face (34) extérieure verticale de la rainure (28) et la face (22) verticale extérieure du panneau (14), chacun des coins (38A, 38B) extérieurs étant monté coulissant verticalement dans la rainure (28) entre une position desserrée et une position serrée entre la face (34) extérieure de la rainure (28) et la face (22) extérieure du panneau (14) ;
- au moins deux organes (62A, 62B) de transmission mobiles qui sont interposés entre le chant (42) du panneau (14) et un fond (30) de la rainure (28) et qui sont chacun apte à transmettre un effort de coulissement à un coin (38A, 38B) extérieur associé appliqué depuis un côté intérieur (24) du panneau (14) ;
les coins (38A, 38B) extérieurs supérieur et inférieur coulissant verticalement, le deuxième coin (38B) extérieur inférieur coulissant verticalement vers le haut depuis sa position desserrée vers sa position serrée située au-dessus de la position desserrée;
**caractérisé en ce que** le premier coin (38A) extérieur supérieur coulisse verticalement vers le haut depuis sa position desserrée vers sa position serrée située au-dessus de la position desserrée.

2. Agencement selon la revendication précédente, **caractérisé en ce que**, pour commander les coins (38A, 38B) extérieurs vers leur position serrée, tous les organes (62A, 62B) de transmission mobiles sont sollicités en compression par au moins un dispositif (63, 63A, 63B) de commande qui est agencé du côté intérieur (24) du panneau.

3. Agencement selon la revendication précédente, **caractérisé en ce que** chaque organe (62A, 62B) de transmission mobile est formé par au moins un élément rigide en forme de segment semi-circulaire qui est reçu coulissant dans un canal (64A, 64B) de forme complémentaire agencé entre le chant (42) du panneau (14) et le fond (30) de la rainure (28).

4. Agencement selon la revendication précédente, **caractérisé en ce que** les organes (62A, 62B) de transmission sont montés en parallèles les uns par rapport aux autres.

5. Agencement selon l'une quelconque des revendications 3 ou 4, **caractérisé en ce que** le canal (64A, 64B) est réalisé dans un berceau (40) qui enfourche le chant (42) du panneau (14) et qui est interposé entre le panneau (14) et le fond (30) de la rainure (28).

6. Agencement selon la revendication précédente, 15 **caractérisé en ce que** chaque coin (38A, 38B) extérieur est interposé entre une aile (76) extérieure du berceau (40) et la face (22) extérieure du panneau (14).

7. Agencement selon l'une quelconque des revendications précédentes, **caractérisé en ce qu'**au moins l'un des coins (38A, 38B) extérieur se déplace transversalement en direction du panneau (14) lors de son coulissement vers sa position serrée, ledit coin extérieur comportant une face (72) de serrage qui est tournée vers la face (22) extérieure du panneau.

8. Agencement selon l'une quelconque des revendications précédentes, **caractérisé en ce qu'**au moins l'un des coins extérieurs se déplace uniquement verticalement lors de son coulissement vers sa position serrée, au moins un patin (74) de serrage monté coulissant transversalement étant interposé entre au moins l'un des coins (38A) extérieurs et la face (22) extérieure du panneau, le patin (74) de serrage comportant une face de serrage (72) tournée vers la face (22) extérieure du panneau (14).

9. Agencement selon l'une quelconque des revendications 7 ou 8, **caractérisé en ce qu'**une cale est interposée entre la face extérieure (22) du panneau (14) et la face (72) de serrage.

10. Agencement selon l'une quelconque des revendications 5 à 9, **caractérisé en ce qu'**il comporte deux dispositifs (63A, 63B) de commande distincts pour commander indépendamment le coulissement du coin (38A) extérieur supérieur et du coin (38B) extérieur inférieur.

11. Agencement selon la revendication précédente, **caractérisé en ce que** chaque dispositif (63A, 63B) de commande comporte au moins une vis (82A, 82B) qui est apte à solliciter chaque organe (62A, 62B) de transmission, la vis (82A, 82B) de commande étant vissée dans un écrou (86) qui est monté fixe par rapport au berceau (40) pour permettre le déplacement axial de la vis (82A, 82B) de commande par rapport au berceau (40) par vissage ou dévissage, chaque dispositif (63A, 63B) de commande commandant le serrage de chacun des coins (38A, 38B) extérieurs supérieur et inférieur indépendamment l'un de l'autre.

12. Agencement selon l'une quelconque des revendications 5 à 9, **caractérisé en ce qu'**il comporte un dispositif (63) de commande commun aux deux coins (38A, 38B) extérieurs supérieur et inférieur pour permettre leur serrage simultané.

13. Agencement selon la revendication précédente, **caractérisé en ce que** le dispositif (63) de commande comporte au moins une vis (82) de commande qui est vissée dans un écrou (100) qui est monté coulissant verticalement dans le berceau (40), le coulissement de la vis (82) de commande vers le bas sollicitant l'organe (62A) de transmission associé à l'un des coins (38A) extérieurs vers sa position serrée, tandis que le coulissement de l'écrou (100) vers le haut sollicite l'organe (62B) de transmission associées à l'autre des coins (38B) extérieurs vers sa position serrée par l'intermédiaire de moyens de renvoi d'effort, le serragedes coins (38A, 38B) extérieurs étant ainsi réalisé simultanément par vissage de la vis (82) de commande dans l'écrou (100).

14. Agencement selon la revendication précédente, **caractérisé en ce que** les moyens de renvoi d'effort sont formés par au moins une came (102) solidaire en coulissement de l'écrou (100) et par au moins un poussoir (104) guidé en déplacement le long d'une trajectoire en arc de cercle dans le berceau (40), la came (102) étant apte à écarter un suiveur (106) de came du poussoir (104) de l'axe de la vis (82) de commande en provoquant le coulissement d'une extrémité (108) inférieure du poussoir (104) vers le bas pour pousser l'organe (62B) de transmission associé.

15. Agencement selon la revendication précédente, **caractérisé en ce que** le dispositif (63) commande comporte deux cames (102) et deux poussoirs (104) disposés symétriquement par rapport à l'axe de la vis (82) de commande.

## Patentansprüche

1. Anordnung zum Befestigen einer vertikalen Platte (14) in einer vertikal nach oben offenen Längsnut (28) für die Aufnahme einer unteren Kante (42) der Platte (14),
wobei die Platte (14) eine Innenfläche (20) und eine Außenfläche (22) umfasst, wobei die Befestigung durch quer verlaufendes Klemmen zwischen quer gegenüberliegenden Keilen (36A, 36B; 38A, 38B) erfolgt, wobei die Anordnung umfasst:
- wenigstens einen ersten oberen äußeren Keil (38A) und wenigstens einen zweiten unteren äußeren Keil (38B), die jeweils zwischen einer vertikalen Außenfläche (34) der Nut (28) und der vertikalen Außenfläche (22) der Platte (14) eingesetzt sind, wobei jeder der äußeren Keile (38A, 38B) vertikal gleitend in der Nut (28) zwischen einer gelösten Position und einer geklemmten Position zwischen der Außenfläche (34) der Nut (28) und der Außenfläche (22) der Platte (14) montiert ist;
- wenigstens zwei bewegliche Übertragungsorgane (62A, 62B), die zwischen der Kante (42) der Platte (14) und einem Boden (30) der Nut (28) eingesetzt sind und die jeweils geeignet sind, eine Gleitkraft auf einen zugehörigen äußeren Keil (38A, 38B) zu übertragen, die von einer Innenseite (24) der Platte (14) her angewendet wird, wobei der obere und untere äußere Keil (38A, 38B) vertikal gleiten, wobei der zweite untere äußere Keil (38B) vertikal nach oben von seiner gelösten Position in seine geklemmte Position gleitet, die sich über der gelösten Position befindet;
**dadurch gekennzeichnet, dass** der erste obere äußere Keil (38A) vertikal nach oben von seiner gelösten Position in seine geklemmte Position gleitet, die sich über der gelösten Position befindet.

2. Anordnung nach dem vorstehenden Anspruch, **dadurch gekennzeichnet, dass** zum Steuern der äußeren Keile (38A, 38B) in ihre geklemmte Position alle beweglichen Übertragungsorgane (62A, 62B) von wenigstens einer Steuervorrichtung (63, 63A, 63B) auf Druck beansprucht werden, die seitens der Innenseite (24) der Platte angeordnet ist.

3. Anordnung nach dem vorstehenden Anspruch, **dadurch gekennzeichnet, dass** jedes bewegliche Übertragungsorgan (62A, 62B) von wenigstens einem starren Element in Form eines halbrunden Segments gebildet wird, das gleitend in einem Kanal (64A, 64B) komplementärer Form aufgenommen wird, der zwischen der Kante (42) der Platte (14) und dem Boden (30) der Nut (28) angeordnet ist.

4. Anordnung nach dem vorstehenden Anspruch, **dadurch gekennzeichnet, dass** die Übertragungsorgane (62A, 62B) parallel zueinander montiert sind.

5. Anordnung nach irgendeinem der Ansprüche 3 oder 4, **dadurch gekennzeichnet, dass** der Kanal (64A, 64B) in einem Sattel (40) ausgeführt ist, der die Kante (42) der Platte (14) aufnimmt und der zwischen der Platte (14) und dem Boden (30) der Nut (28) eingesetzt ist.

6. Anordnung nach dem vorstehenden Anspruch, **dadurch gekennzeichnet, dass** jeder äußere Keil (38A, 38B) zwischen einem äußeren Flügel (76) des Sattels (40) und der Außenfläche (22) der Platte (14) eingesetzt ist.

7. Anordnung nach irgendeinem der vorstehenden Ansprüche, **dadurch gekennzeichnet, dass** sich wenigstens einer der äußeren Keile (38A, 38B) quer in Richtung der Platte (14) bei seinem Gleiten in seine geklemmte Position verschiebt, wobei der äußere Keil eine Klemmfläche (72) umfasst, die zur Außenfläche (22) der Platte gewandt ist.

8. Anordnung nach irgendeinem der vorstehenden Ansprüche, **dadurch gekennzeichnet, dass** sich wenigstens einer der äußeren Keile ausschließlich vertikal bei seinem Gleiten in seine geklemmte Position verschiebt, wobei wenigstens eine Klemmbacke (74), die quer gleitend montiert ist, zwischen wenigstens einem der äußeren Keile (38A) und der Außenfläche (22) der Platte eingesetzt ist, wobei die Klemmbacke (74) eine Klemmfläche (72) umfasst, die zur Außenfläche (22) der Platte (14) gewandt ist.

9. Anordnung nach irgendeinem der Ansprüche 7 oder 8, **dadurch gekennzeichnet, dass** eine Einlage zwischen der Außenfläche (22) der Platte (14) und der Klemmfläche (72) eingesetzt ist.

10. Anordnung nach irgendeinem der Ansprüche 5 bis 9, **dadurch gekennzeichnet, dass** sie zwei verschiedene Steuervorrichtungen (63A, 63B) umfasst, um das Gleiten des oberen äußeren Keils (38A) und des unteren äußeren Keils (38B) unabhängig zu steuern.

11. Anordnung nach dem vorstehenden Anspruch, **dadurch gekennzeichnet, dass** jede Steuervorrichtung (63A, 63B) wenigstens eine Schraube (82A, 82B) umfasst, die geeignet ist, jedes Übertragungsorgan (62A, 62B) zu beanspruchen, wobei die Steuerschraube (82A, 82B) in eine Mutter (86) geschraubt wird, die in Bezug auf den Sattel (40) fest montiert ist, um die axiale Verschiebung der Steuerschraube (82A, 82B) in Bezug auf den Sattel (40) durch Hineinschrauben oder Herausschrauben zu ermöglichen, wobei jede Steuervorrichtung (63A, 63B) das Klemmen jedes der oberen und unteren äußeren Keile (38A, 38B) unabhängig voneinander steuert.

12. Anordnung nach irgendeinem der Ansprüche 5 bis 9, **dadurch gekennzeichnet, dass** sie eine Steuervorrichtung (63) umfasst, die den zwei oberen und unteren äußeren Keilen (38A, 38B) gemeinsam ist, um ihr gleichzeitiges Klemmen zu ermöglichen.

13. Anordnung nach dem vorstehenden Anspruch, **dadurch gekennzeichnet, dass** die Steuervorrichtung (63) wenigstens eine Steuerschraube (82) umfasst, die in eine Mutter (100) hineingeschraubt wird, die vertikal gleitend in dem Sattel (40) montiert ist, wobei das Gleiten der Steuerschraube (82) nach unten das Übertragungsorgan (62A), das einem der äußeren Keile (38A) zugehörig ist, in seine geklemmte Position beansprucht, während das Gleiten der Mutter (100) nach oben das Übertragungsorgan (62B), das dem anderen der äußeren Keile (38B) zugehörig ist, in seine geklemmte Position mittels Kraftumlenkmitteln beansprucht, wobei das Klemmen der äußeren Keile (38A, 38B) somit gleichzeitig durch Hineinschrauben der Steuerschraube (82) in die Mutter (100) erfolgt.

14. Anordnung nach dem vorstehenden Anspruch, **dadurch gekennzeichnet, dass** die Kraftumlenkmittel von wenigstens einem Nocken (102), der mit der Mutter (100) gleitfest verbunden ist, und von wenigstens einem Stößel (104) gebildet werden, der entlang einer Kreisbogenbahn in dem Sattel (40) verschiebend geführt wird, wobei der Nocken (102) geeignet ist, einen Nockenmitläufer (106) des Stößels (104) von der Achse der Steuerschraube (82) zu beabstanden, indem das Gleiten eines unteren Endes (108) des Stößels (104) nach unten bewirkt wird, um das zugehörige Übertragungsorgan (62B) anzuschieben.

15. Anordnung nach dem vorstehenden Anspruch, **dadurch gekennzeichnet, dass** die Steuervorrichtung (63) zwei Nocken (102) und zwei Stößel (104) umfasst, die in Bezug auf die Achse der Steuerschraube (82) symmetrisch angeordnet sind.

## Claims

1. Arrangement for securing a vertical panel (14) in a longitudinal groove (28) open vertically upwards for receiving a lower edge (42) of the panel (14),
the panel (14) including an inner face (20) and an outer face (22), securing being carried out by transverse tightening between transversely opposed wedges (36A, 36B; 38A, 38B), the arrangement including:
- at least a first upper outer wedge (38A) and at least a second lower outer wedge (38B) which are each interposed between a vertical outer face (34) of the groove (28) and the vertical outer face (22) of the panel (14), each of the outer wedges (38A, 38B) being slidably mounted vertically in the groove (28) between an untightened position and a tightened position between the outer face (34) of the groove (28) and the outer face (22) of the panel (14);
- at least two mobile transmission members (62A, 62B) which are interposed between the edge (42) of the panel (14) and a bottom (30) of the groove (28) and which are each capable of transmitting a sliding force to an associated outer wedge (38A, 38B) applied from an inner side (24) of the panel (14);
the upper and lower outer wedges (38A, 38B) sliding vertically, the second lower outer wedge (38B) sliding vertically upwards from its untightened position towards its tightened position located above the untightened position;
**characterised in that** the first upper outer wedge (38A) slides vertically upwards from its untightened position towards its tightened position located above the untightened position.

2. Arrangement according to the preceding claim, **characterised in that** in order to control the outer wedges (38A, 38B) towards their tightened position, all the mobile transmission members (62A, 62B) are subjected to compression by at least one control device (63, 63A, 63B) which is arranged on the inner side (24) of the panel.

3. Arrangement according to the preceding claim, **characterised in that** each mobile transmission member (62A, 62B) is formed by at least one rigid element in the form of a semi-circular segment which is slidably received in a channel (64A, 64B) of complementary shape arranged between the edge (42) of the panel (14) and the bottom (30) of the groove (28).

4. Arrangement according to the preceding claim, **characterised in that** the transmission members (62A, 62B) are mounted parallel to one another.

5. Arrangement according to either Claim 3 or 4, **characterised in that** the channel (64A, 64B) is made in a cradle (40) which straddles the edge (42) of the panel (14) and is interposed between the panel (14) and the bottom (30) of the groove (28).

6. Arrangement according to the preceding claim, **characterised in that** each outer wedge (38A, 38B) is interposed between an outer wing (76) of the cradle (40) and the outer face (22) of the panel (14).

7. Arrangement according to any one of the preceding claims, **characterised in that** at least one of the outer wedges (38A, 38B) moves transversely in the direction of the panel (14) as it slides towards its tightened position, said outer wedge including a tightening face (72) facing the outer face (22) of the panel.

8. Arrangement according to any one of the preceding claims, **characterised in that** at least one of the outer wedges moves exclusively vertically as it slides towards its tightened position, at least one tightening shoe (74) mounted so as to slide transversely being interposed between at least one of the outer wedges (38A) and the outer face (22) of the panel, the tightening shoe (74) including a tightening face (72) facing the outer face (22) of the panel (14).

9. Arrangement according to either Claim 7 or 8, **characterised in that** a shim is interposed between the outer face (22) of the panel (14) and the tightening face (72) .

10. Arrangement according to any one of Claims 5 to 9, **characterised in that** it includes two distinct control devices (63A, 63B) to independently control the sliding of the upper outer wedge (38A) and the lower outer edge (38B) .

11. Arrangement according to the preceding claim, **characterised in that** each control device (63A, 63B) includes at least one screw (82A, 82B) which is capable of actuating each transmission member (62A, 62B), the control screw (82A, 82B) being screwed into a nut (86) which is fixedly mounted with respect to the cradle (40) in order to allow the axial movement of the control screw (82A, 82B) with respect to the cradle (40) by screwing or unscrewing, each control device (63A, 63B) controlling the tightening of each of the upper and lower outer wedges (38A, 38B) independently of one another.

12. Arrangement according to any one of Claims 5 to 9, **characterised in that** it includes a control device (63) shared by the two upper and lower outer wedges (38A, 38B) to allow their simultaneous tightening.

13. Arrangement according to the preceding claim, **characterised in that** the control device (63) includes at least one control screw (82) which is screwed into a nut (100) which is mounted so as to slide vertically in the cradle (40), the downward sliding of the control screw (82) pushing the transmission member (62A) associated with one of the outer wedges (38A) towards its tightened position, whereas the upward sliding of the nut (100) pushes the transmission member (62B) associated with the other of the outer wedges (38B) towards its tightened position by the intermediary of force return means, the tightening of the outer wedges (38A, 38B) thus being carried out simultaneously by screwing the control screw (82) into the nut (100).

14. Arrangement according to the preceding claim, **characterised in that** the force return means are formed by at least one cam (102) slidingly integral with the nut (100) and by at least one pusher (104) guided in displacement along a circular path in the cradle (40), the cam (102) being capable of moving a cam follower (106) of the pusher (104) away from the axis of the control screw (82) causing a lower end (108) of the pusher (104) to slide downwards in order to push the associated transmission member (62B).

15. Arrangement according to the preceding claim, **characterised in that** the control device (63) includes two cams (102) and two pushers (104) arranged symmetrically relative to the axis of the control screw (82) .
